# EUROPEAN PATENT SPECIFICATION

(11) **EP 2 988 185 B1**
(45) Date of publication and mention of the grant of the patent: **20.11.2019**
(21) Application number: 14785484.8
(22) Date of filing: 15.04.2014
(51) Int. Cl.: G05B 15/02, H04L 12/28, H04L 12/66, H04L 12/24

(54) **SMART HOME SYSTEM AND CONTROL METHOD**
INTELLIGENTES HEIMSYSTEM UND STEUERUNGSVERFAHREN
SYSTÈME DOMESTIQUE INTELLIGENT ET PROCÉDÉ DE COMMANDE

(30) Priority: 17.04.2013 CN 201310135166
(43) Date of publication of application: 24.02.2016
(73) Proprietor: Gree Electric Appliances, Inc. of Zhuhai, Zhuhai, Guangdong 519070 (CN)
(72) Inventor: ZHAO, Zhigang, Zhuhai Guangdong 519070 (CN); LIN, Chenglin, Zhuhai Guangdong 519070 (CN); MOU, Guixian, Zhuhai Guangdong 519070 (CN); SONG, Haichuan, Zhuhai Guangdong 519070 (CN); GUO, Wenjun, Zhuhai Guangdong 519070 (CN)
(74) Representative: Penza, Giancarlo
(86) International application number: PCT/CN2014/075391
(87) International publication number: WO 2014/169807

(56) References cited:
- CN-A- 101 247 301
- CN-A- 102 193 550
- CN-U- 202 759 621
- JP-A- 2005 333 367
- US-A1- 2008 228 904
- US-A1- 2010 138 007
- US-A1- 2013 014 219
- US-A1- 2013 060 357

## Description

### Cross Reference to Related Applications

This application claims the benefit of priority of Chinese Patent Application No. 201310135166.X, filed on April 17, 2013, entitled "Smart Home System and Control Method Thereof".

### Technical Field

The present disclosure relates to the field of smart home, more particularly, to a smart home system and a control method thereof.

### Background

With the increasing development of people's living standard, a smart home has become an important part of people's living.

Based on a house as the platform, the smart home system is a living environment which takes advantages of generic cabling technology, network communication technology, design of smart home system, security and defense technology, automatic control technology, and audio and video technology, integrates domestic-life-related facilities, and constructs a highly efficient management system for house facilities and household-related matters, so as to improve the security, convenience, comfort and artistry of home, and to realize environment protections and energy-savings.

At present, the scene profile of smart home system is mostly that the control is executed by wired devices such as a display panel, touch screen, manual controller, remote controller or centralized controller, or by short-range infrared devices such as remote controller. The disadvantages of this manner are that the control needs manual intervention and the operation mode is single. Only a minority of special models have the function of setting scene profiles, however these models have no function of setting schedules, that is, the scene profile shall be set manually every day, but cannot be automatically executed several times a day or a week.

Additionally, in many existing smart home systems, too many household electrical appliances are provided, which causes too many wires to be arranged between the gateway devices and the bottom devices (namely, the household electrical appliances). Accordingly, when the gateway devices with too many wires communicate with the control terminals, the communication lines will become more complex. What's more, communication signals transmitted via the complex communication lines are poor and the production cost of the circuits is high.

US 2013/0014219 discloses a system for monitoring and controlling household devices such as door locks, cameras, lights, temperature controls, appliances .

The system includes a computer, a mobile device, a computer network (such as Internet), a router, a gateway device and the household devices.

### Summary

The present disclosure aims at providing a smart home system and a control method thereof. Through the combination of a scene profile and a schedule, a user can set a series of instructions which are executed automatically several times a day or a week without repeated manual settings by the user. The smart home system and the control method thereof facilitate the user in automatically and intelligently managing the smart household appliances as desired.

The objective of the present disclosure is achieved by the technical scheme as defined by the appended claims.

The good effects of the present disclosure are as follows:
With the above mentioned structure and the control method, the present disclosure has the following advantages:
Through the combination of a scene profile and a schedule, a user can set a series of instructions which are executed automatically several times a day or a week, without repeated manual settings by the user. The smart home system and the control method thereof facilitate the user in automatically and intelligently managing the smart home as desired. Without getting in touch with the bottom devices and without learning professional knowledge of air conditioner, the user can automatically control the smart household appliances by simply setting a scene profile and a schedule via APP software. The wired connection is changed into a wireless connection, thus the user is set free from the surrounding wires and needs not to take much effort in wiring design.

### Brief Description of Drawings

Fig. 1 is a structural schematic diagram of the smart home system of the present disclosure;
Fig. 2 is a schematic diagram of the smart home system according to one embodiment of the present invention; wherein:
   1. cloud server; 2. router; 3. control terminal; 4. gateway device; 5. household appliance;
   6. 485-RF gateway; 7. CAN-RF gateway; 8. client.

### Detailed Description of Disclosed Embodiments

In order to make the objectives, the technical schemes and advantages of the present disclosure more apparent and better understood, the present disclosure will be described in more details with reference to the accompanying figures and embodiments. It should be understood that the specific embodiments described herein are merely to explain the present invention, but not to limit the scope of the present invention.

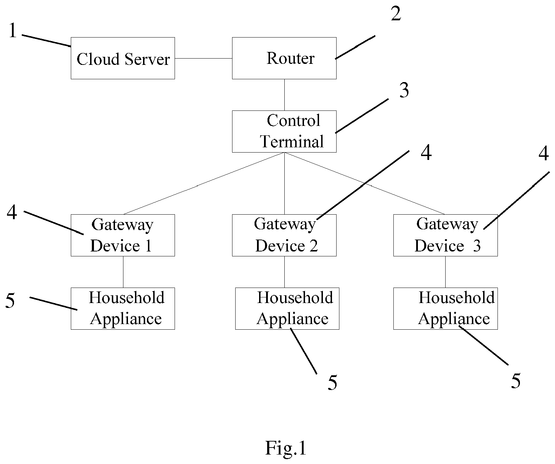

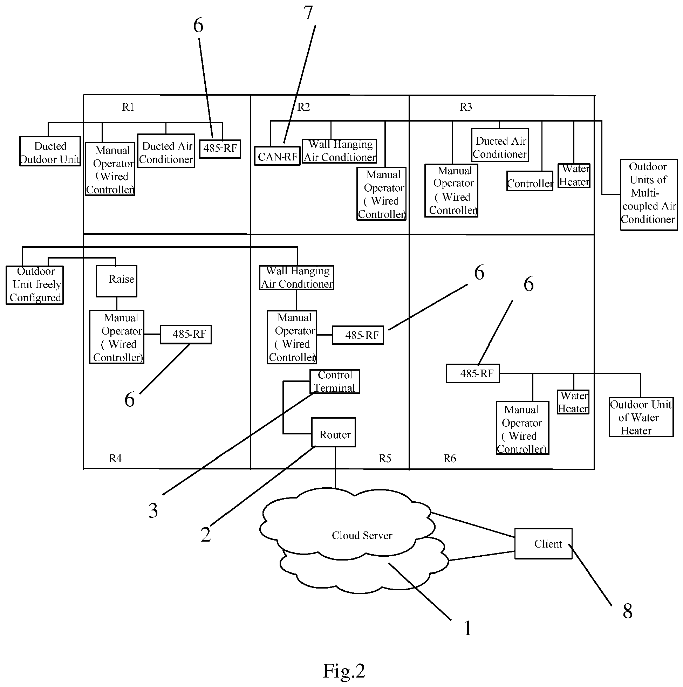

As shown in Figures 1 and 2, the smart home system comprises a client 8, a cloud server 1, a router 2, a control terminal 3, gateway devices 4 and household appliances 5.

The client 8 is configured to transmit control instructions containing preset time and a scene command to the cloud server 1.

The cloud server 1 is configured to receive the control instructions containing preset time and a scene command from the client 8, and transmit the control instructions to the router 2.

The router 2 receives the control instructions and transmits them to the control terminal 3.

The router 2 communicates with the control terminal 3.

The control terminal 3 stores the control instructions, judges whether the current time is the preset time or not, and transmits the scene command to the gateway devices 4.

The gateway devices 4 receive, decode the scene command and generate control commands, and transmit the control commands to the household appliances 5.

The household appliances 5 communicate with the gateway devices 4, and execute the control commands.

Preferably, the client 8 is a mobile phone, a panel computer or a laptop computer.

Preferably, as a first embodiment of the present invention, the control terminal 3 includes a storage unit, a detecting unit and a transmit unit.

The storage unit is configured to store the control instructions containing the preset time and the scene command.

The detecting unit is configured to judge whether the current time is the preset time or not.

The transmit unit is configured to transmit the scene command to the gateway devices 4.

Preferably, as a second embodiment of the present invention, the gateway devices include at least one of the following gateways:
a CAN-RF gateway 7, which is connected with a household appliance via a CAN-bus;
a RS485-RF gateway 6, which is connected with a household appliance via a RS485-bus.

Preferably, as a third embodiment of the present invention, each gateway device 4 further includes a feedback unit, which is configured to receive the running status data of the household appliances and transmit the data to the control terminal 3.

The control terminal 3 further includes a processing unit and a transmission unit.

The processing unit is configured to analyze and process the running status data of the household appliances 5, and generate a command execution result.

The transmission unit is configured to transmit the running status data of the household appliances 5 and the command execution result to the cloud server 1 via the router 2.

The cloud server 1 receives the running status data of the household appliances 5 and the command execution result, and transmits them to the client 8.

Preferably, as a fourth embodiment of the present invention, the gateway devices 4 communicate with the control terminal 3 through radio-frequency signals.

The control terminal 3 communicates with the router 2 through Wi-Fi signals.

The router 2 communicates with the cloud server 1 through internet.

The cloud server 1 communicates with the client 8 through the wired internet, 3G, 4G, Wi-Fi or GPRS network.

The control method for the smart home system includes following steps:
transmitting, by the client 8, control instructions containing preset time and a scene command, to the cloud server 1;
transmitting, by the cloud server 1, the control instructions to the control terminal 3 via a router 2;
storing the control instructions by the control terminal 3;
judging, by the control terminal 3, whether the current time is the preset time or not; if yes, transmitting the corresponding scene command to gateway devices 4;
receiving, decoding the scene command and generating control commands by the gateway devices 4, and transmitting the control commands to the household appliances 5;
receiving and executing the control commands by the household appliances 5.

Preferably, as a first embodiment of the control method of the present invention, after receiving and executing the control commands by the household appliances 5, the control method further includes following steps:
sampling, by the gateway devices 4, the running status data of the household appliances 5 in real time and transmitting the data to the control terminal 3;
receiving and processing the running status data by the control terminal 3; judging whether the control commands have been executed or not; and generating a command execution result;
transmitting the command execution result and the running status data by the control terminal 3 to the cloud server 1 via the router 2;
receiving the command execution result and the running status data by the cloud server 1, and transmitting them to the client 8.

Preferably, as a second embodiment of the control method of the present invention, the client 8 transmits the control instructions to the control terminal 3 through a local area network bridged through the router 2.

The control terminal 3 transmits the command execution result and the running status data to the client 8 through the local area network bridged through the router 2.

According to one embodiment of the present invention, the operations by a user are specified as follows:
installing App software in a mobile phone or a panel computer;
running and logging on the APP;
setting a scene profile on the App.

The App software transmits instructions to the cloud server, and further transmits to a Wi-Fi host.

The Wi-Fi host receives and stores the instructions, and judges whether the real-time clock is in agreement with the execution time for the operation instructions saved in the internal storage or not; if yes, the instructions are converted into RF signals and the RF signals are transmitted to RF gateways.

RF gateways decode the received RF signals into CAN-bus data or RS485-bus data, and transmit the data to the smart household appliances (e.g., an air-conditioner) so as to control the running of the household appliances.

The smart household appliances transmit the current running status data to the RF gateways. The RF gateways convert the current running status data into RF signals and transmit the RF signals to the Wi-Fi host. The Wi-Fi host decodes the received RF signals and converts the decoded signals into Wi-Fi signals. The Wi-Fi signals are transmitted to the APP software via the cloud server. The APP software displays the acquired information on an interface for the user.

## Claims

1. A smart home system comprising a client (8), a cloud server (1), a router (2), a control terminal (3), gateway devices (4) and household appliances (5); wherein
the client is configured to transmit control instructions, which comprise preset time and a scene command, to the cloud server (1);
the cloud server (1) is configured to receive the control instructions, which are transmitted by the client and comprise preset time and a scene command, and to transmit the control instructions to the router (2);
the router (2) is configured to receive the control instructions and transmit the control instructions to the control terminal (3);
the control terminal (3) comprises a storage unit, a detecting unit and a transmit unit, and is configured to store the control instructions, judge whether current time is the preset time or not, and, if yes, transmit the scene command to the gateway devices (4); wherein
the storage unit is configured to store the control instructions containing the preset time and the scene command;
the detecting unit is configured to judge whether the current time is the preset time or not; and
the transmit unit is configured to transmit the scene command to the gateway devices (4);
the gateway devices (4) are configured to receive the scene command, decode the scene command, generate control commands, and transmit the control commands to the household appliances (5);
the household appliances (5) are configured to communicate with the gateway devices (4), and execute the control commands.

2. The smart home system according to claim 1, wherein, the client is a mobile phone, a panel computer or a laptop computer.

3. The smart home system according to claims 1 or 2, wherein, the gateway devices comprise at least one of following gateways:
a CAN-RF gateway (4), which is connected with the household appliance (5) via a CAN-bus;
a RS485-RF gateway (6), which is connected with the household appliance via a RS485-bus.

4. The smart home system according to any one of claims 1-3, wherein,
each gateway device further comprises a feedback unit, said feedback unit is configured to receive running status data of the household appliances and transmits the data to the control terminal (3);
the control terminal (3) further comprises a processing unit and a transmission unit;
the processing unit is configured to analyze and process the running status data of the household appliances, and generate a command execution result;
the transmission unit is configured to transmit the command execution result and the running status data of the household appliances (5) to the cloud server (1) via the router (2);
the cloud server (1) is configured to receive the command execution result and the running status data of the household appliances (5), and transmit the result and the data to the client (8).

5. The smart home system according to claim 4, wherein,
the gateway devices (4) are configured to communicate with the control terminal (3) through radio-frequency signals;
the control terminal (3) are configured to communicate with the router (2) through Wi-Fi signals;
the router (2) is configured to communicate with the cloud server (1) through internet;
the cloud server (1) is configured to communicate with the client (8) through internet, 3G, 4G, Wi-Fi or GPRS network.

6. A control method for smart home system, the system comprising a client (8), a cloud server (1), a router (2), a control terminal (3), gateway devices (4) and household appliances (5), the method comprising the following steps:
transmitting, by the client (8), control instructions containing preset time and a scene command, to the cloud server (1);
transmitting the control instructions to the control terminal (3) by the cloud server (1);
storing the control instructions by the control terminal (3);
judging, by the control terminal (3), whether current time is the preset time or not; if yes, transmitting corresponding scene command to the gateway devices (4);
receiving the scene command, decoding the scene command and generating control commands by the gateway devices (4), and transmitting the control commands to the household appliances (5);
receiving and executing the control commands by the household appliances.

7. The control method for smart home system according to claim 6, wherein, after receiving and executing the control commands by the household appliances (5), the control method further comprises following steps:
sampling running status data of the household appliances (5) in real time and transmitting the data to the control terminal (3) by the gateway devices (4);
receiving and processing the running status data by the control terminal (3); judging whether the control commands have been executed or not; and generating a command execution result;
transmitting, by the control terminal (3), the command execution result and the running status data to the cloud server via the router (2);
receiving the command execution result and the running status data by the cloud server (1), and transmitting the result and the data to the client (8).

8. A control method for smart home system, the system comprising a client (8), a router (2), a control terminal (3), gateway devices (4) and household appliances (5), the method comprising the following steps:
transmitting, by the client (8), control instructions containing preset time and a scene command to the control terminal (3) through local area network bridged through the router (2);
storing the control instructions by the control terminal (3);
judging, by the control terminal (3), whether current time is the preset time or not; if yes, transmitting corresponding scene command to the gateway devices (4);
receiving the scene command, decoding the scene command and generating control commands by the gateway devices (4), and transmitting the control commands to the household appliances (5);
receiving and executing the control commands by the household appliances (5).

9. The control method for smart home system according to claim 8, wherein, after receiving and executing the control commands by the household appliances (5), the control method further comprises following steps:
sampling running status data of the household appliances (5) in real time and transmitting the data to the control terminal (3) by the gateway devices (4);
receiving and processing the running status data by the control terminal (3); judging whether the control commands have been executed or not; and generating a command execution result;
transmitting, by the control terminal (3), the command execution result and the running status data to the client (8) through the local area network bridged through the router (2).

## Patentansprüche

1. Intelligentes Heimsystem umfassend einen Client (8), einen Cloud-Server (1), einen Router (2) und ein Steuerendgerät (3), Gateway-Geräte (4) und Haushaltsgeräte (5);
wobei der Client so konfiguriert ist, dass er Steueranweisungen, die eine voreingestellte Zeit und einen Szenenbefehl umfassen, an den Cloud-Server (1) überträgt;
der Cloud-Server (1) konfiguriert ist, um die Steueranweisungen zu empfangen, die vom Client übertragen werden und eine voreingestellte Zeit und einen Szenenbefehl umfassen, und um die Steueranweisungen an den Router (2) zu übertragen;
der Router (2) konfiguriert ist, um die Steueranweisungen zu empfangen und die Steueranweisungen an das Steuerendgerät (3) zu übertragen;
das Steuerendgerät (3) eine Speichereinheit, eine Erfassungseinheit und eine Sendeeinheit umfasst und ist konfiguriert, um die Steueranweisungen zu speichern, zu beurteilen, ob die aktuelle Zeit die voreingestellte Zeit ist oder nicht, und, wenn ja, den Szenenbefehl an die Gateway-Geräte (4) zu übertragen; wobei die Speichereinheit konfiguriert ist, um die Steueranweisungen zu speichern, die die voreingestellte Zeit und den Szenenbefehl enthalten;
die Erfassungseinheit konfiguriert ist, um zu beurteilen, ob die aktuelle Zeit die voreingestellte Zeit ist oder nicht; und die Sendeeinheit konfiguriert ist, um den Szenenbefehl an die Gateway-Geräte (4) zu übertragen;
die Gateway-Geräte (4) konfiguriert sind, um den Szenenbefehl zu empfangen, den Szenenbefehl zu decodieren, Steuerbefehle zu erzeugen und die Steuerbefehle an die Haushaltsgeräte (5) zu übertragen; die Haushaltsgeräte (5) so konfiguriert sind, dass sie mit den Gateway-Geräten (4) kommunizieren und die Steuerbefehle ausführen.

2. Intelligentes Heimsystem nach Anspruch 1, wobei der Client ein Mobiltelefon, ein Panel-Computer oder ein Laptop-Computer ist.

3. Intelligentes Heimsystem nach Anspruch 1 oder 2, wobei die Gateway-Geräte mindestens eines der folgenden Gateways umfassen:
ein CAN-RF-Gateway (4), das über einen CAN-Bus mit dem Haushaltsgerät (5) verbunden ist;
ein RS485-RF-Gateway (6), das über einen RS485-Bus mit dem Haushaltsgerät verbunden ist.

4. Intelligentes Heimsystem nach einem der Ansprüche 1-3, wobei
jedes Gateway-Gerät zudem eine Rückmeldungseinheit umfasst, wobei die Rückmeldungseinheit konfiguriert ist, um Betriebszustandsdaten der Haushaltsgeräte zu empfangen und die Daten an das Steuerendgerät (3) überträgt;
das Steuerendgerät (3) zudem eine Verarbeitungseinheit und eine Übertragungseinheit umfasst;
die Verarbeitungseinheit konfiguriert ist, um die Betriebszustandsdaten der Haushaltsgeräte zu analysieren und zu verarbeiten und ein Befehlsausführungsergebnis zu erzeugen;
die Übertragungseinheit konfiguriert ist, um das Befehlsausführungsergebnis und die Betriebszustandsdaten der Haushaltsgeräte (5) über den Router (2) an den Cloud-Server (1) zu übertragen;
der Cloud-Server (1) so konfiguriert ist, dass er das Befehlsausführungsergebnis und die Betriebszustandsdaten der Haushaltsgeräte (5) empfängt und das Ergebnis und die Daten an den Client (8) überträgt.

5. Intelligentes Heimsystem nach Anspruch 4, wobei die Gateway-Geräte (4) konfiguriert sind, um mit dem Steuerendgerät (3) durch Hochfrequenzsignale zu kommunizieren;
die Steuerendgeräte (3) konfiguriert sind, um mit dem Router (2) durch Wi-Fi-Signale zu kommunizieren;
der Router (2) für die Kommunikation mit dem Cloud-Server (1) durch das Internet konfiguriert ist;
der Cloud-Server (1) für die Kommunikation mit dem Client (8) durch ein Internet-, 3G-, 4G-, Wi-Fi- oder GPRS-Netzwerk konfiguriert ist.

6. Steuerverfahren für ein intelligentes Heimsystem, wobei das System einen Client (8), einen Cloud-Server (1), einen Router (2), ein Steuerendgerät (3), Gateway-Geräte (4) und Haushaltsgeräte (5) umfasst, wobei das Verfahren die folgenden Schritte umfasst:
Übertragen von Steueranweisungen, die eine voreingestellte Zeit und einen Szenenbefehl enthalten, durch den Client (8) an den Cloud-Server (1);
Übertragen der Steueranweisungen an das Steuerendgerät (3) durch den Cloud-Server (1);
Speichern der Steueranweisungen durch das Steuerendgerät (3) ;
Beurteilen durch das Steuerendgerät (3), ob die aktuelle Zeit die voreingestellte Zeit ist oder nicht; wenn ja, Übertragen eines entsprechenden Szenenbefehls an die Gateway-Geräte (4);
Empfangen des Szenenbefehls, Decodieren des Szenenbefehls und Erzeugen von Steuerbefehlen durch die Gateway-Geräte (4) und Übertragen der Steuerbefehle an die Haushaltsgeräte (5);
Empfangen und Ausführen der Steuerbefehle durch die Haushaltsgeräte.

7. Steuerverfahren für ein intelligentes Heimsystem nach Anspruch 6, wobei das Steuerverfahren nach dem Empfangen und Ausführen der Steuerbefehle durch die Haushaltsgeräte (5) zudem die folgenden Schritte umfasst:
Abtasten von Betriebszustandsdaten der Haushaltsgeräte (5) in Echtzeit und Übertragen der Daten an das Steuerendgerät (3) durch die Gateway-Geräte (4);
Empfangen und Verarbeiten der Betriebszustandsdaten durch das Steuerendgerät (3); Beurteilen, ob die Steuerbefehle ausgeführt wurden oder nicht; und Erzeugen eines Befehlsausführungsergebnisses;
Übertragen des Befehlsausführungsergebnisses und der Betriebszustandsdaten über den Router (2) an den Cloud-Server durch das Steuerendgerät (3);
Empfangen des Befehlsausführungsergebnisses und der Betriebszustandsdaten durch den Cloud-Server (1),
und Übertragen des Ergebnisses und der Daten an den Client (8).

8. Steuerverfahren für ein intelligentes Heimsystem, wobei das System einen Client (8), einen Router (2), ein Steuerendgerät (3), Gateway-Geräte (4) und Haushaltsgeräte (5) umfasst, wobei das Verfahren die folgenden Schritte umfasst:
Übertragen von Steueranweisungen, die eine voreingestellte Zeit und einen Szenenbefehl enthalten, durch den Client (8) an das Steuerendgerät (3) über ein über den Router (2) überbrücktes lokales Netzwerk;
Speichern der Steueranweisungen durch das Steuerendgerät (3) ;
Beurteilen durch das Steuerendgerät (3), ob die aktuelle Zeit die voreingestellte Zeit ist oder nicht; wenn ja, Übertragen eines entsprechenden Szenenbefehls an die Gateway-Geräte (4);
Empfangen des Szenenbefehls, Decodieren des Szenenbefehls und Erzeugen von Steuerbefehlen durch die Gateway-Geräte (4) und Übertragen der Steuerbefehle an die Haushaltsgeräte (5);
Empfangen und Ausführen der Steuerbefehle durch die Haushaltsgeräte (5).

9. Steuerverfahren für ein intelligentes Heimsystem nach Anspruch 8, wobei das Steuerverfahren nach dem Empfangen und Ausführen der Steuerbefehle durch die Haushaltsgeräte (5) zudem die folgenden Schritte umfasst:
Abtasten von Betriebszustandsdaten der Haushaltsgeräte (5) in Echtzeit und Übertragen der Daten an das Steuerendgerät (3) durch die Gateway-Geräte (4);
Empfangen und Verarbeiten der Betriebszustandsdaten durch das Steuerendgerät (3); Beurteilen, ob die Steuerbefehle ausgeführt wurden oder nicht; und Erzeugen eines Befehlsausführungsergebnisses;
Übertragen des Befehlsausführungsergebnisses und der Betriebszustandsdaten an den Client (8) durch das Steuerendgerät (3) über das über den Router (2) überbrückte lokale Netzwerk.

## Revendications

1. Système domestique intelligent comprenant un client (8), un serveur cloud (1), un routeur (2), un terminal de commande (3), des dispositifs de passerelle (4) et des appareils électroménagers (5) ;
dans lequel le client est configuré pour transmettre des instructions de commande qui comprennent une durée prédéfinie et une commande d'opération à destination du serveur cloud (1) ;
le serveur cloud (1) est configuré pour recevoir les instructions de commande étant transmises par le client et comprenant une durée prédéfinie et une commande d'opération, et pour transmettre les instructions de commande au routeur (2) ;
le routeur (2) est configuré pour recevoir les instructions de commande et transmettre les instructions de commande au terminal de commande (3) ;
le terminal de commande (3) comprend une unité de stockage, une unité de détection et une unité de transmission, et est configuré pour stocker les instructions de commande, estimer si la durée actuelle est la durée prédéfinie ou non, et, si oui, transmettre la commande d'opération aux dispositifs de passerelle (4) ; dans lequel l'unité de stockage est configurée pour stocker les instructions de commande contenant la durée prédéfinie et le commande d'opération ;
l'unité de détection est configurée pour estimer si la durée actuelle est la durée prédéfinie ou non ; et l'unité de transmission est configurée pour transmettre la commande d'opération aux dispositifs de passerelle (4) ;
les dispositifs de passerelle (4) sont configurés pour recevoir la commande d'opération, décoder la commande d'opération, générer des commandes de contrôle et transmettre les commandes de contrôle aux appareils électroménagers (5) ;
les appareils électroménagers (5) sont configurés pour communiquer avec les dispositifs de passerelle (4) et exécuter les commandes de contrôle.

2. Système domestique intelligent selon la revendication 1, dans lequel le client est un téléphone mobile, un tableau d'ordinateur ou un ordinateur portable.

3. Système domestique intelligent selon la revendication 1 ou 2, dans lequel les dispositifs de passerelle comprennent au moins une des passerelles suivantes :
une passerelle CAN-RF (4) étant reliée à l'appareil électroménager (5) via un bus CAN ;
une passerelle RS485-RF (6) étant reliée à l'appareil électroménager via un bus RS485 ;

4. Système domestique intelligent selon l'une quelconque des revendications 1-3, dans lequel chaque dispositif de passerelle comprend de plus une unité de retour d'informations, ladite unité de retour d'informations est configurée pour recevoir des données d'état de fonctionnement des appareils électroménagers et transmettre les données au terminal de commande (3) ; le terminal de commande (3) comprend de plus une unité de traitement et une unité de transmission ;
l'unité de traitement est configurée pour analyser et traiter les données d'état de fonctionnement des appareils électroménagers et générer un résultat de l'exécution de la commande ;
l'unité de transmission est configurée pour transmettre le résultat de l'exécution de la commande et les données d'état de fonctionnement des appareils électroménagers (5) au serveur cloud (1) via le routeur (2) ;
le serveur cloud (1) est configuré pour recevoir le résultat de l'exécution de la commande et les données d'état de fonctionnement des appareils électroménagers (5) et transmettre le résultat et les données au client (8) .

5. Système domestique intelligent selon la revendication 4, dans lequel les dispositifs de passerelle (4) sont configurés pour communiquer avec le terminal de commande (3) à travers des signaux radioélectriques ;
le terminal de commande (3) est configuré pour communiquer avec le routeur (2) à travers des signaux wifi ;
le routeur (2) est configuré pour communiquer avec le serveur cloud (1) par internet ;
le serveur cloud (1) est configuré pour communiquer avec le client (8) par internet, un réseau 3G, 4G, wifi ou GPRS.

6. Procédé de commande pour un système domestique intelligent, le système comprenant un client (8), un serveur cloud (1), un routeur (2), un terminal de commande (3), des dispositifs de passerelle (4) et des appareils électroménagers (5), le procédé comprenant les étapes suivantes :
transmettre, par le client (8), des instructions de commande contenant une durée prédéfinie et une commande d'opération au serveur cloud (1) ;
transmettre les instructions de commande au terminal de commande (3) par le serveur cloud (1) ;
stocker les instructions de commande par le terminal de commande (3) ;
estimer, par le terminal de commande (3), si la durée actuelle est la durée prédéfinie ou non ; si oui, transmettre la commande d'opération correspondante aux dispositifs de passerelle (4) ;
recevoir la commande d'opération, décoder la commande d'opération et générer des commandes de contrôle par les dispositifs de passerelle (4) et transmettre les commandes de contrôle aux appareils électroménagers (5) ;
recevoir et exécuter les commandes de contrôle des appareils électroménagers.

7. Procédé de commande pour un système domestique intelligent selon la revendication 6, dans lequel, après réception et exécution des commandes de contrôle par les appareils électroménagers (5), le procédé de commande comprend de plus les étapes suivantes :
échantillonner les données d'état de fonctionnement des appareils électroménagers (5) en temps réel et transmettre les données au terminal de commande (3) par les dispositifs de passerelle (4) ;
recevoir et traiter les données d'état de fonctionnement par le terminal de commande (3) ; estimer si les commandes de contrôle ont été exécutées ou non ; et générer un résultat de l'exécution de la commande ;
transmettre, par le terminal de commande (3), le résultat de l'exécution de la commande et les données d'état de fonctionnement au serveur cloud via le routeur (2) ;
recevoir le résultat de l'exécution de la commande et les données de l'état de fonctionnement par le serveur cloud (1),
et transmettre le résultat et les données au client (8).

8. Procédé de commande pour un système domestique intelligent, le système comprenant un client (8), un routeur (2), un terminal de commande (3), des dispositifs de passerelle (4) et des appareils électroménagers (5), le procédé comprenant les étapes suivantes :
transmettre, par le client (8), des instructions de commande contenant une durée prédéfinie et une commande d'opération au terminal de commande (3) à travers le réseau local ponté à travers le routeur (2) ;
stocker les instructions de commande par le terminal de commande (3) ;
estimer, par le terminal de commande (3), si la durée actuelle est la durée prédéfinie ou non ; si oui, transmettre la commande d'opération correspondante aux dispositifs de passerelle (4) ;
recevoir la commande d'opération, décoder la commande d'opération et générer des commandes de contrôle par les dispositifs de passerelle (4) et transmettre les commandes de contrôle aux appareils électroménagers (5) ;
recevoir et exécuter les commandes de contrôle des appareils électroménagers (5).

9. Procédé de commande pour un système domestique intelligent selon la revendication 8, dans lequel, après réception et exécution des commandes de contrôle par les appareils électroménagers (5), le procédé de commande comprend de plus les étapes suivantes :
échantillonner les données d'état de fonctionnement des appareils électroménagers (5) en temps réel et transmettre les données au terminal de commande (3) par les dispositifs de passerelle (4) ;
recevoir et traiter les données d'état de fonctionnement par le terminal de commande (3) ; estimer si les commandes de contrôle ont été exécutées ou non ; et générer un résultat de l'exécution de la commande ;
transmettre, par le terminal de commande (3), le résultat de l'exécution de la commande et les données d'état de fonctionnement au client (8) à travers le réseau local ponté à travers le routeur (2).
